# EUROPEAN PATENT SPECIFICATION

(11) **EP 2 947 569 B1**
(45) Date of publication and mention of the grant of the patent: **06.06.2018**
(21) Application number: 15000666.6
(22) Date of filing: 06.03.2015
(51) Int. Cl.: H04L 29/08, H04L 29/06, G06F 9/50

(54) **Hybrid applications operating between on-premise and cloud platforms**
Hybride Anwendungen in Betrieb zwischen vor Ort und in Cloud Plattforme
Applications hybrides fonctionnant entre plates-formes sur site et en nuage

(30) Priority: 23.05.2014 US 201414285631
(43) Date of publication of application: 25.11.2015
(73) Proprietor: SAP SE, 69190 Walldorf (DE)
(72) Inventor: Nikolov, Radoslav, 69190 Walldorf (DE); Nenov, Iliyan, 69190 Walldorf (DE); Petev, Petio, 69190 Walldorf (DE); Tankov, Nikolai, 69190 Walldorf (DE); Valchev, Manol, 69190 Walldorf (DE)
(74) Representative: Müller-Boré & Partner Patentanwälte PartG mbB

(56) References cited:
- US-A1- 2011 231 899

## Description

### BACKGROUND

On-premise software delivery model is a model of software deployment that involves an enterprise to purchase hardware such as servers, to invest capital into software licenses, to invest into dedicated IT staff for maintenance and support, etc. On-premise is the traditional model of software deployment where enterprises deploy applications in-house, e.g., on the premises of the enterprise. The initial investment for the on-premise computing infrastructure is typically high, but may pay off long term. One advantage of the on-premise model is that the enterprise has control over the systems and data. On-premise platforms are considered more secure than cloud platforms as corporate data is stored and handled internally, e.g., within an internal private network.

Cloud computing is a widely adopted and evolving concept. Generally, cloud computing refers to a model for enabling ubiquitous, convenient, and on-demand access via Internet to shared pools of configurable computing resources such as networks, servers, storages, applications, functionalities, and the like. There are a number of benefits associated with cloud computing for both the providers of the computing resources and their customers. For example, customers may develop and deploy various business applications on a cloud infrastructure supplied by a cloud provider without the cost and complexity to procure and manage the hardware and software necessary to execute the applications. The customers do not need to manage or control the underlying cloud infrastructure, e.g., including network, servers, operating systems, storage, etc., but still have control over the deployed applications. On the other hand, the provider's computing resources are available to provide multiple customers with different physical and virtual resources dynamically assigned and reassigned according to clients' load. Further, cloud resources and applications are accessible via the Internet.
Document US 2011/0231899 A1 discloses a system providing a cloud-computing service from a cloud-computing environment comprising a plurality of cloud-computing resources. The system may comprise: a management module configured to manage a cloud-computing resource of the plurality of cloud-computing resources as a cloud-computing service, wherein the cloud-computing service performs a computer workload; an adapter configured to connect to the cloud-computing resource to the system and translate a management instruction received from the management module into a proprietary cloud application program interface call for the cloud-computing resource; a cloud service bus configured to route the management instruction from the management module to the adapter; a consumption module configured to allow a user to subscribe the cloud-computing service; a planning module configured to plan the cloud-computing service; and a build module configured to build the cloud-computing service from the cloud-computing resource and publish the cloud-computing service to the consumption module.

### BRIEF DESCRIPTION OF THE DRAWINGS

The claims set forth the embodiments with particularity. The embodiments are illustrated by way of examples and not by way of limitation in the figures of the accompanying drawings in which like references indicate similar elements. The embodiments, together with its advantages, may be best understood from the following detailed description taken in conjunction with the accompanying drawings.
**FIG. 1** is a block diagram illustrating an exemplary computer system architecture to enable one or more hybrid applications to operate between an on-premise platform and a cloud platform, according to one embodiment.
**FIG. 2** is a flow diagram illustrating a process to consume a cloud resource by an application deployed to an on-premise platform, according to one embodiment.
**FIG. 3** is a flow diagram illustrating a process to consume an on-premise resource from an application deployed to a cloud platform, according to one embodiment.
**FIG. 4** is a flow diagram illustrating a process to configure interoperability for applications between an on-premise platform and a cloud platform, according to one embodiment.
**FIG. 5** illustrates an exemplary architecture to permit interoperability of applications between an on-premise platform and a cloud platform, according to one embodiment.
**FIG. 6** is a block diagram illustrating an exemplary computer system, according to one embodiment.

### DETAILED DESCRIPTION

Embodiments of techniques for hybrid applications operating between on-premise and cloud platforms are described herein. In the following description, numerous specific details are set forth to provide a thorough understanding of the embodiments. One skilled in the relevant art will recognize, however, that the embodiments can be practiced without one or more of the specific details, or with other methods, components, materials, etc. In other instances, well-known structures, materials, or operations are not shown or described in detail.

Reference throughout this specification to "one embodiment", "this embodiment" and similar phrases, means that a particular feature, structure, or characteristic described in connection with the embodiment is included in at least one of the one or more embodiments. Thus, the appearances of these phrases in various places throughout this specification are not necessarily all referring to the same embodiment. Furthermore, the particular features, structures, or characteristics may be combined in any suitable manner in one or more embodiments.

Companies may select either to run an application fully on-premise or fully on a cloud platform. However, there are advantages and disadvantages with both cloud and on-premise platforms. Issues related to security and compliance of cloud platforms may be one disadvantage. On the other hand, for on-premise platforms the cost may be a disadvantage. Since the initial investment in on-premise infrastructure may be high, companies that have already invested in on-premise platforms may prefer gradual adoption of cloud platforms, if at all, in order to maximize return and protect their initial investments. Therefore, a hybrid software delivery model may bring more value to such companies. The hybrid delivery model is a hybrid model between on-premise and cloud, e.g., on-demand. For example, in the case where an application operates on an on-premise platform with sensitive data, such data may be undesirable to be stored on a cloud platform and accessed via the Internet. In such a case, a hybrid software delivery may be used where cloud services can be consumed by applications operating on an on-premise platform. Another situation where hybrid software delivery model may be appropriate is when companies prefer to run their existing on-premise applications on a cloud platform. For example, business applications running and operating on-premise at one point may be extended or migrated towards a cloud platform, for example, to consume functionality and modern development environment and models provided by the cloud platform. However, to enable an application operating on-premise to operate on cloud, the company may have to incur costs comparable to develop a new application resulting in worse protection for on-premise investments. Also, when an application is migrated to the cloud platform, two versions of the application may have to be maintained for the on-premise and the cloud platform, increasing maintenance costs for the application.

Companies applying either on-premise or cloud software delivery model usually may have to balance between security and costs. In one embodiment, a hybrid delivery model is implemented that enables one or more applications to be deployed to both on-premise and cloud platforms without modifying the one or more applications. An application operable to be deployed and run on both on-premise and cloud platforms, without modification of the original source code of the application, is referred herein as a hybrid application. For example, a hybrid application may be deployed and/or run on an on-premise platform, and consume services or other resources provided by a cloud platform (e.g., public or virtual private cloud). Further, a hybrid application may be deployed and/or run on a cloud platform and consume resources of an on-premise platform such as a backend system.

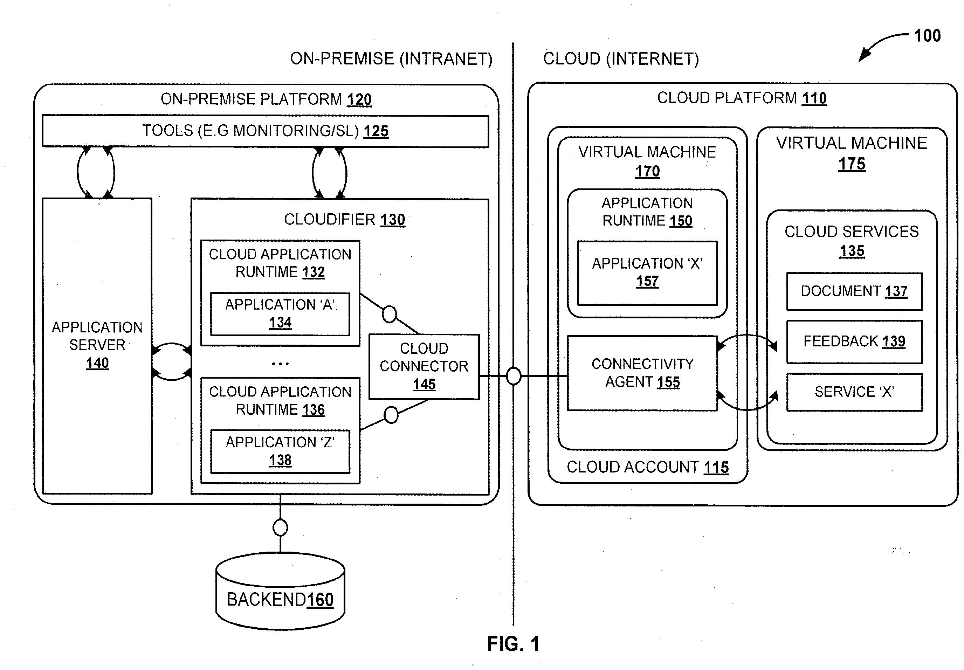

FIG. 1 illustrates computer system architecture 100 to enable one or more hybrid applications to operate between on-premise platform 120 and cloud platform 110, according to one embodiment. In various embodiments, cloud platform 110 may comprise, among other components, one or more on-demand runtime platforms such as application runtime 150. Cloud platform 110 may provide functionality such as resource pooling, where the computing resources of the cloud infrastructure provider are pooled to serve multiple consumers using a multi-tenant model. Another functionality that cloud platform 110 may provide is elasticity. Elasticity refers to the capability of cloud platform 110 to elastically provision and release computing resources to scale commensurate with demand. Cloud platform 110 may also possess a metering characteristic that refers to the capability of cloud platform 110 to automatically control, monitor, report, and optimize resource usage at some level of abstraction appropriate to the type of service, for example, storage, processing, bandwidth, and active user accounts, and so on.

Cloud platform 110 may be viewed as containing both a physical layer and an abstraction layer. The physical layer may consist of the hardware resources to support the cloud services being provided, and may typically include a server, a storage unit, network components, and so on. The abstraction layer may include the software deployed across the physical layer, which manifests the essential functionalities provided by cloud platform 110. For example, cloud platform 110 may provide an application runtime such as application runtime 150, user interface (UI) development toolkits, internal configurations, cloud services such as cloud services 135. Exemplary cloud services 135 may include a connectivity service, a persistence service, an identity service, a feedback service 139, a document service 137, a translations service, a collaboration service, a mobile service, etc. The functionality provided by the cloud platform 110 can be used by customers to develop and deploy software applications on application runtime 150 of cloud platform 110. In various embodiments, the cloud platform 110 may also provide support for the application lifecycle process, for example, deployment, installation, provisioning and maintenance of applications. In one embodiment, cloud platform 110 may be a platform-as-a-service (PaaS) solution implemented in Java. Example of such PaaS offering may be SAP® HANA Cloud Platform.

On-premise platform 120 is a computing platform that may be installed and operated on the premises of an entity such as a customer of on-premise platform 120. On-premise platform 120 may provide functionality such as application server 140 and tools 125. Tools 125 may provide functionality for software lifecycle management, software monitoring, etc.

In one embodiment, cloudifier 130 component is implemented. Cloudifier 130 is an extension of on-premise platform 120 and provides an environment for migration of applications between on-premise platform 120 and cloud platform 110. Cloudifier 130 further provides an environment to develop, deploy, and run hybrid applications. Cloudifier 130 exposes one or more cloud application runtimes to systems and modules within on-premise platform 120 such as tools 125 or application server 140. Thus, cloudifier 130 integrates cloud application runtimes 132 and 136 with on-premise platform 120. For example, cloudifier 130 is integrated with application server 140 and tools 125. Cloudifier 130 connects internal systems of on-premise platform 120 to cloud platform 110. For example, systems of on-premise platform 120 that may be connected to cloud platform 110 through cloudifier 130 may be Enterprise resource planning (ERP) systems, Customer relationship management (CRM) systems, private cloud, etc. Once connected through cloudifier 130, systems of on-premise platform 120 may use cloud services 135, among other on-demand services.

Cloudifier 130 may include one or more application runtimes such as cloud application runtime 132 and cloud application runtime 136. In one embodiment, cloud application runtime 132 and cloud application runtime 136 correspond to application runtime 150, but are installed on on-premise platform 120. As such, cloud application runtime 132 and cloud application runtime 136 are local version of an application runtime that is installed on cloud platform 110. Cloud application runtime 132 and cloud application runtime 136 provide to on-premise platform 120 the same or corresponding environment where an application would run in cloud platform 110, including the same or corresponding application programming interfaces (APIs). Cloudifier 130 may include one or more APIs that are also provided at cloud platform 110. In one embodiment, cloud application runtime 132 or cloud application runtime 136 maybe an entity that is installed together with application server 140 in on-premise platform 120.

Hybrid applications may be deployed and run locally on cloud application runtime 132 or cloud application runtime 136. For example, hybrid application 'A' 134 and hybrid application 'Z' 138 are hybrid applications operable to be deployed and run locally on cloud application runtime 132 and cloud application runtime 136. At the same time, hybrid application 'A' 134 and hybrid application 'Z' 138 may be deployed to application runtime 150 at cloud platform 110, without modification of hybrid application 'A' 134 and hybrid application 'Z' 138, respectively. Similarly, application 'X' 157 deployed on application runtime 150 may also be deployed on cloud application runtime 132 or cloud application runtime 136. Hybrid applications remain unchanged being deployed to cloud platform 110 or local on-premise platform 120. Further, hybrid applications 'A' 134 and 'Z' 138 may consume both resources provided by on-premise platform 120 or cloud platform 110. In one embodiment, hybrid applications may be already developed applications that may have previously been installed on application server 140 of on-premise platform 120, and then re-installed on local cloud application runtime (132 and 136) of cloudifier 130. Also, a first portion of a hybrid application may be installed on a cloud application runtime installed locally at an on-premise platform, and a second portion of the hybrid application may be installed on an application runtime provided by a cloud platform. Further, application 'X' 157 although installed on application runtime 150 of cloud platform 110, may also be re-installed to cloud application runtime 132 or cloud application runtime 136 of on-premise platform 120. In various embodiments, cloud application runtime 132, cloud application runtime 136, and application runtime 150 may be Java® containers such as Java Enterprise Edition of Apache Tomcat (TomEE), Lean Java Server (LJS), etc.

Further, cloudifier 130 includes cloud connector 145 that, together with connectivity agent 155, provides connectivity between on-premise platform 120 and cloud platform 110. Applications and backend systems of on-premise platform 120 operate in private customers' networks. Whereas, applications, databases, and services of cloud platform 110 may be accessed and requested via the Internet. Cloud connector 145 together with connectivity agent 155 integrates applications running in cloud platform 110 with backend systems and resources of on-premise platform 120. Further, cloud connector 145 together with connectivity agent 155 integrates applications running in on-premise platform 120 with services, applications and resources of cloud platform 110. In one embodiment, requests from on-premise applications to cloud platform 110 are virtually represented by connectivity agent 155 as if the requests are sent from cloud platform 110. Requests from on-premise applications to cloud platform 110 are authenticated with connectivity agent 155 credentials. Further, cloud connector 145 to connect to cloud platform 100 via connectivity agent 155.

In one embodiment, cloud connector 145 establishes a persistent and secure communication tunnel from a network of on-premise platform 120 to connectivity agent 155 associated with cloud account 115. Typically, a customer or a group of customers of cloud platform 110 are assigned a cloud account such as cloud account 115 to be authorized to develop, deploy, run, and configure cloud applications. Once established, the secure tunnel may be used by applications assigned to cloud account 115 to remotely communicate with systems and resources of the intranet of on-premise platform 120. In one embodiment, the persistent tunnel may also be used for bidirectional communication and by multiple virtual connections. Applications and systems of on-premise platform 120 may use the tunnel to consume resources and services of cloud platform 110. For example, hybrid application 'A' 134 may consume one or more services from cloud services 135 through the tunnel established by cloud connector 145.

In various embodiments, cloud platform 110 uses a sandboxing approach. Cloud platform 110 starts applications of a specific account in a sandboxed environment, so that cloud applications are isolated from each other, as well as from cloud platform's services and infrastructure. Communication between cloud applications and cloud services 135 is encrypted with mutual authentication of the caller and the receiver. For calls from a cloud application to a backend system of on-premise platform 120 that are delivered through the established tunnel, the calling account and application may be identified and authenticated by a certificate which may be provisioned during application start.

In cloud platform 110, for application 'X' 157 to consume a service from cloud services 135, a remote connection may be initiated from a virtual machine where the application is installed, e.g., virtual machine 170, to a virtual machine where one or more cloud services are installed, e.g., virtual machine 175. In a similar manner, connectivity agent 155 may be hosted on virtual machine 170 in a sandbox environment. Requests from hybrid applications 'A' 134 and 'Z' 138 are authenticated with credentials provided by virtual machine 170, where connectivity agent 155 is installed. Thus, requests from applications for cloud services 135 received through connectivity agent 155 are authenticated as if the applications were running on cloud platform 110 instead of on-premise platform 120. Thus, from perspective of hybrid applications 'A' 134 and 'Z' 138, a virtual cloud is available at the intranet of on-premise platform 120. Similarly, requests from applications to backend 160 or other on-premise systems received through cloud connector 145 may use a local address and port as if the applications were running on on-premise platform 120 instead of cloud platform 110. Thus, applications running in cloud platform 110 use on-premise resources as if virtually the on-premise resources were available via the Internet.

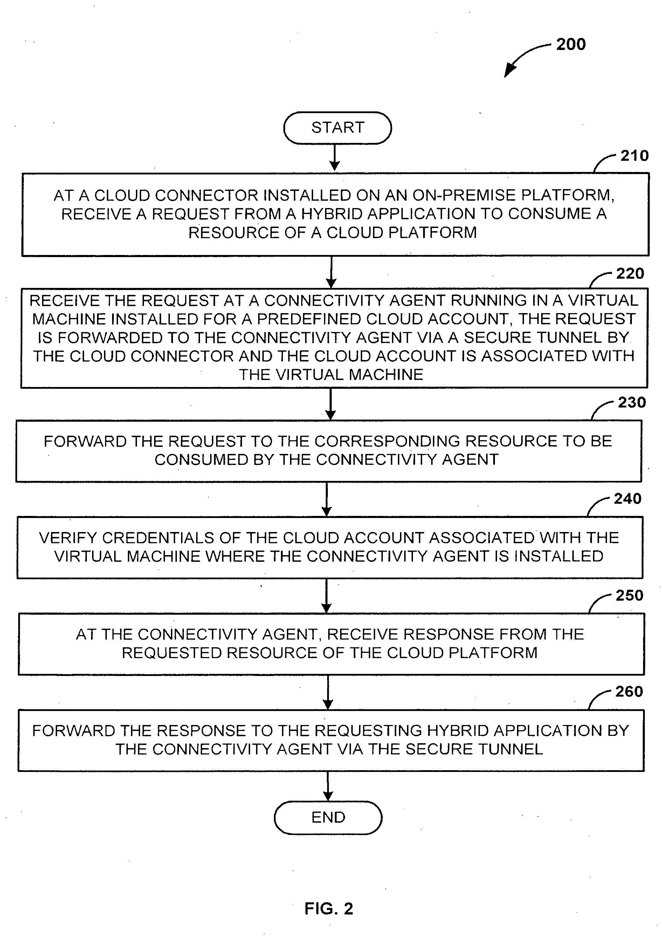

FIG. 2 illustrates process 200 to consume a cloud resource by an application deployed to an on-premise platform, according to one embodiment. At 210, a request from a hybrid application to consume a resource of a cloud platform is received, e.g., application 'A' 134 or application 'Z' 138 in FIG. 1. Examples of cloud resources include, but are not limited to, one or more cloud services such cloud services 135, storages, applications, etc. The local cloud application runtime is installed on the on-premise platform. The hybrid application from where the request is sent is deployed on the local cloud application runtime. The on-premise platform resides within a private internal network such as a private enterprise intranet.

In one embodiment, the request is received at a cloud connector, e.g., cloud connector 145 in FIG. 1. The cloud connector is deployed and installed on the on-premise platform. The cloud connector is used for on-premise to cloud connectivity. The request may be forwarded to the cloud connector by the local cloud application runtime. In one embodiment, the cloud connector has established a secure tunnel to a cloud platform. For example, the secure tunnel may be established to a predefined virtual machine of the cloud platform (e.g., virtual machine 170 in FIG. 1). In one embodiment, the secure tunnel establishes communication with a connectivity agent, e.g., connectivity agent 155 in FIG. 1, installed on a virtual machine of the cloud platform.

At 220, the request is received at the connectivity agent. The connectivity agent is running in the virtual machine and is being installed for a predefined cloud account. The request is automatically forwarded to the connectivity agent via the tunnel by the cloud connector. In one embodiment, the connectivity agent has been installed and running prior to the establishment of the secure tunnel. The connectivity agent accepts connections not only from a local host at the cloud platform but also from external sources such as the cloud connector in the on-premise platform. Upon receiving the request, the cloud connector forwards the request to the connectivity agent via the secure tunnel.

At 230, the connectivity agent forwards the request to the corresponding resource to be consumed. At 240, credentials of the cloud account associated with the virtual machine where the connectivity agent is installed, are verified. For example, a cloud service verifies whether the cloud account associated with the virtual machine and the connectivity agent, respectively, is authorized to access the requested cloud resource. Thus, requests to services in the cloud from on-premise hybrid applications are forwarded and processed via the cloud account. Because requests are processed via the cloud account, consumption of cloud services and other cloud resources from an on-premise platform are tracked, accounted for, and secured. At 250, a response from the requested resource of the cloud platform is received at the connectivity agent. At 260, the response is forwarded to the requesting hybrid application by the connectivity agent via the secure tunnel.

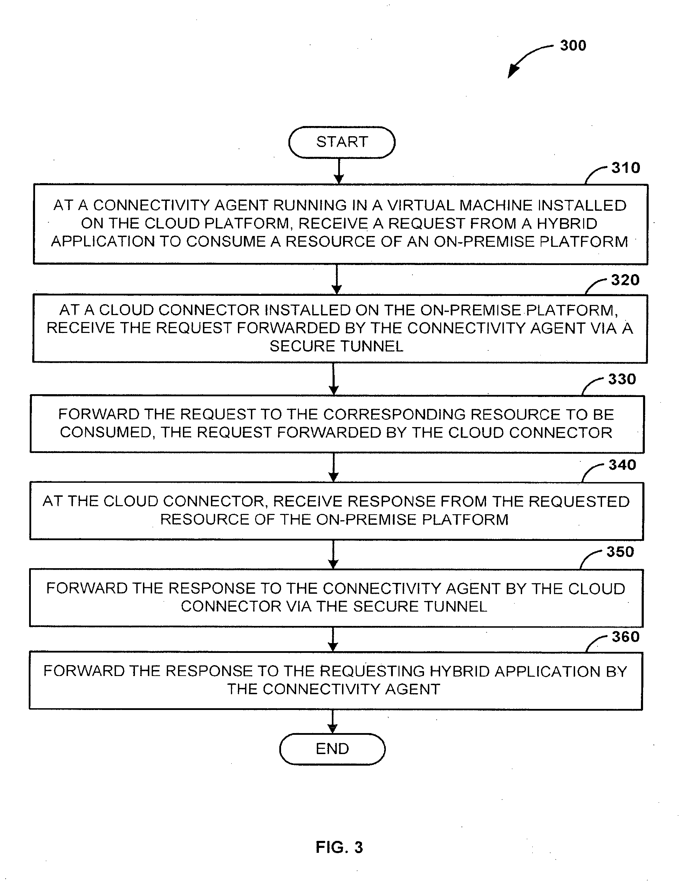

FIG. 3 illustrates process 300 to consume an on-premise resource from an application deployed to a cloud platform, according to one embodiment. At 310, a request from a hybrid application to consume a resource of an on-premise platform is received at a connectivity agent. The hybrid application may be a cloud application deployed to the cloud application runtime installed on a cloud platform. For example, the cloud application runtime may be installed on a virtual machine of the cloud platform, e.g., virtual machine 170 in FIG. 1. Examples of on-premise resources that may be requested from applications running on the cloud platform include, but are not limited to, backend systems, storages, other applications, etc. The on-premise platform resides within a private internal network, whereas the cloud platform is accessible in the Internet.

The connectivity agent where the request is received is running in the virtual machine of the cloud platform where the cloud application runtime is installed, according to one embodiment. The connectivity agent is being installed for a predefined cloud account. The request may be forwarded to the connectivity agent by the cloud application runtime. At 320, the request is received at a cloud connector installed on the on-premise platform. The request is forwarded to the cloud connector by the connectivity agent via a secure tunnel. In one embodiment, the tunnel is established by the cloud connector to the connectivity agent prior forwarding the request.

At 330, the request is forwarded to the corresponding resource to be consumed. The resource to be consumed is within the private internal network of the on-premise platform. For example, the request may be forwarded to a backend system such as backend 160 in FIG. 1. The request may be forwarded to other on-premise systems such as an ERP system, database, etc. The request is forwarded to the resource by the cloud connector. In one embodiment, at 340, a response is received from the requested resource. For example, data may be fetched by the backend system in response to the request. The response is received at the cloud connector. In turn, at 350, the cloud connector forwards the response to the connectivity agent via the established secure tunnel. In turn, at 360, the connectivity agent forwards the response to the requesting hybrid application running in the cloud application runtime.

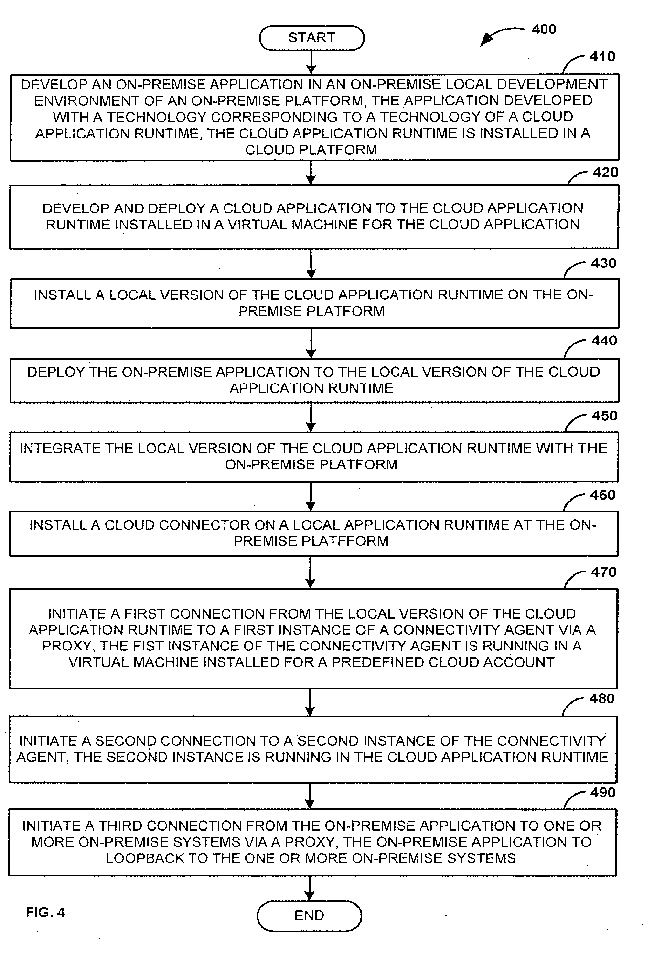

FIG. 4 illustrates process 400 to configure interoperability for applications between an on-premise platform and a cloud platform, according to one embodiment. At 410, an on-premise application is developed in an on-premise local development environment of the on-premise platform, e.g., application 'A' 134 or 'Z' 138 in FIG. 1. In one embodiment, the application is developed with a technology corresponding to a technology of a cloud application runtime. An example of such technology may be Java Enterprise Edition 6. The cloud application runtime, e.g., application runtime 150 in FIG. 1, is installed on the cloud platform. At 420, a cloud application is developed. The cloud application is deployed to the cloud application runtime. The cloud application runtime may be installed on a virtual machine for the cloud application.

At 430, a local version of the cloud application runtime is installed on the on-premise platform. Examples of local version of a cloud application runtime are cloud application runtime 132 and 136 in FIG. 1 that are installed locally on the on-premise platform. The local version of the cloud platform is within internal network of the on-premise platform. The local version of the cloud application runtime may also include APIs of cloud services or other cloud specific modules such as logging modules, user management, monitoring modules, etc. At 440, the on-premise application is deployed to the local version of the cloud application runtime.

At 450, the local version of the cloud application runtime is integrated with the on-premise platform. For example, a cloufier runtime installed and running on the on-premise platform exposes the cloud application runtime to other systems of the on-premise platform. At 460, a cloud connector, e.g., cloud connector 145 in FIG. 1, is installed as a separate process on a cloudifier runtime at the on-premise platform. At 470, a first connection from the local application runtime to a first instance of a connectivity agent is initiated via a first proxy. The first proxy is running on the cloud connector. The first connection may be used by the on-premise application for consumption of resources of the cloud platform. In one embodiment, a tunnel client of the cloud connector initiates the first connection. The first instance of the connectivity agent is running in a virtual machine installed for a predefined cloud account. Thus, the on-premise application is connected to the cloud via the connectivity agent and can consume cloud resources and services via the first proxy. Further, the on-premise application consumption activities are accounted through the cloud account associated with the first instance of the connectivity agent. Also, since the on-premise connection communicates with cloud resources via the connectivity agent though the cloud account, the on-premise application virtually operates as if it is deployed to the cloud platform.

At 480, a second connection to a second instance of the connectivity agent is initiated. The second connection may be used by a cloud application deployed to the cloud application runtime for consumption of resources of the on-premise platform. The second instance of the connectivity agent is running in the cloud application runtime at the cloud platform. In one embodiment, the tunnel client of the cloud connector initiates the second connection and opens a port from the cloud application runtime to the on-premise platform, including on-premise systems, storages, etc. At 490, a third connection from the on-premise application to one or more on-premise systems is initiated via a second proxy. The second proxy for on-premise systems may be running on the cloud connector. The on-premise application that is developed with modern cloud technology can loop back through the proxy to the one or more on-premise systems such as legacy systems. Thus, in various embodiments, process 400 may configure both an on-premise application and a cloud application to interoperate between an on-premise computing platform and a cloud computing platform.

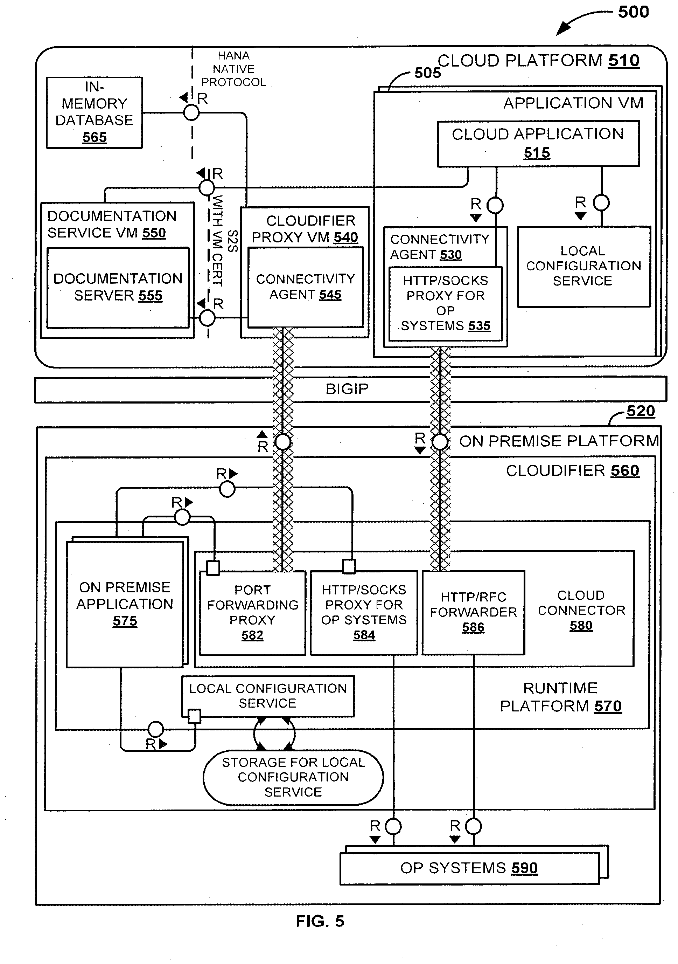

FIG. 5 illustrates system architecture 500 for interoperability of applications between on-premise platform 520 and cloud platform 510, according to one embodiment. Cloud connector 580 is deployed as an application to runtime platform 570 of cloudifier 560. Cloud connector 580, once installed may be configured to establish tunnel to a connectivity agent 545. In one embodiment, cloud connector 580 starts a proxy listening on a predefined localhost such as port forwarding proxy 582. Port forwarding proxy 582 may listen for incoming request including requests from on-premise application 575. In one embodiment, by port forwarding proxy 582 may use tunnel protocol.

In one embodiment, requests from on-premise application 575 to consume resources of cloud platform 510 are received by port forwarding proxy 582 and then forwarded via the established tunnel to the connectivity agent 545. Connectivity agent 545 is running in cloudifier proxy virtual machine (VM) 540 and accepts requests from external sources. In one embodiment, a cloud account may be associated with one cloudifier proxy VM. Once the request from on-premise application is received at connectivity agent 545, the request is forwarded to the requested cloud resource. For example, when on-premise application 575 request to condume a cloud service such as a documentation service connectivity agent 545 may forward the request to documentation server 555 installed on documentation service VM 550. In one embodiment, on-premise application 575 may requests to consume storage of cloud platform 510. In such case, connectivity agent 545 may forward the request, for example, to in-memory database 565.

On-premise application 575 may also consume on-premise resources. In one embodiment, cloud connector 580 starts proxy for on-premise systems 584. Proxy for on-premise system 584 forward requests from on-premise application 575 to on-premise systems 590. Thus, on-premise application 575 may loopback to consume resources of on-premise platform 520. Proxy for on-premise systems 584 may be an HTTP proxy, a socks proxy, etc.

In one embodiment, on-premise resources may be consumed by cloud applications. For example, cloud application 515 running in application VM 505 may requests to consume one or more on-premise systems 590. The request is forwarded to a proxy for on-premise systems 535 running in connectivity agent 530 installed on application VM 505. Proxy for on-premise systems 535 forwards the request to port proxy forwarder such as an HTTP or RFC forwarder 586. Forwarder 586 may be running in cloud connector 580. Once the request from cloud application 515 is received at forwarder 586, forwarder 586 forwards the request to the respective on-premise system from on-premise systems 590.

Some embodiments may include the above-described methods being written as one or more software components. These components, and the functionality associated with each, may be used by client, server, distributed, or peer computer systems. These components may be written in a computer language corresponding to one or more programming languages such as, functional, declarative, procedural, object-oriented, lower level languages and the like. They may be linked to other components via various application programming interfaces and then compiled into one complete application for a server or a client. Alternatively, the components maybe implemented in server and client applications. Further, these components may be linked together via various distributed programming protocols. Some example embodiments may include remote procedure calls being used to implement one or more of these components across a distributed programming environment. For example, a logic level may reside on a first computer system that is remotely located from a second computer system containing an interface level (e.g., a graphical user interface). These first and second computer systems can be configured in a server-client, peer-to-peer, or some other configuration. The clients can vary in complexity from mobile and handheld devices, to thin clients and on to thick clients or even other servers.

The above-illustrated software components are tangibly stored on a computer readable storage medium as instructions. The term "computer readable storage medium" should be taken to include a single medium or multiple media that stores one or more sets of instructions. The term "computer readable storage medium" should be taken to include any physical article that is capable of undergoing a set of physical changes to physically store, encode, or otherwise carry a set of instructions for execution by a computer system which causes the computer system to perform any of the methods or process steps described, represented, or illustrated herein. A computer readable storage medium may be a non-transitory computer readable storage medium. Examples of a non-transitory computer readable storage media include, but are not limited to: magnetic media, such as hard disks, floppy disks, and magnetic tape; optical media such as CD-ROMs, DVDs and holographic devices; magneto-optical media; and hardware devices that are specially configured to store and execute, such as application-specific integrated circuits ("ASICs"), programmable logic devices ("PLDs") and ROM and RAM devices. Examples of computer readable instructions include machine code, such as produced by a compiler, and files containing higher-level code that are executed by a computer using an interpreter. For example, an embodiment may be implemented using Java, C++, or other object-oriented programming language and development tools. Another embodiment may be implemented in hard-wired circuitry in place of, or in combination with machine readable software instructions.

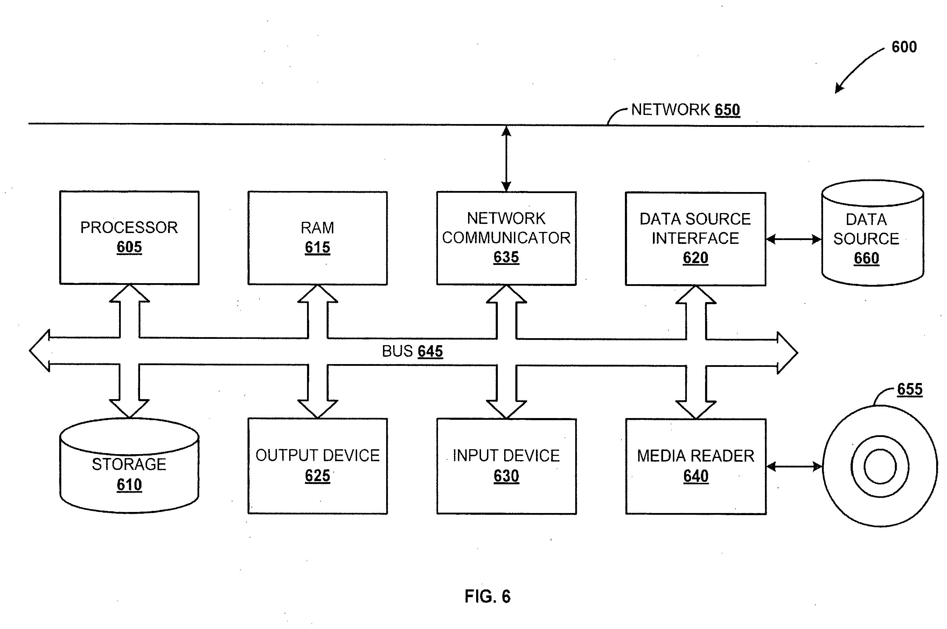

FIG. 6 is a block diagram of an exemplary computer system 600. The computer system 600 includes a processor 605 that executes software instructions or code stored on a computer readable storage medium 655 to perform the above-illustrated methods. The processor 605 can include a plurality of cores. The computer system 600 includes a media reader 640 to read the instructions from the computer readable storage medium 655 and store the instructions in storage 610 or in random access memory (RAM) 615. The storage 610 provides a large space for keeping static data where at least some instructions could be stored for later execution. According to some embodiments, such as some in-memory computing system embodiments, the RAM 615 can have sufficient storage capacity to store much of the data required for processing in the RAM 615 instead of in the storage 610. In some embodiments, all of the data required for processing may be stored in the RAM 615. The stored instructions may be further compiled to generate other representations of the instructions and dynamically stored in the RAM 615. The processor 605 reads instructions from the RAM 615 and performs actions as instructed. According to one embodiment, the computer system 600 further includes an output device 625 (e.g., a display) to provide at least some of the results of the execution as output including, but not limited to, visual information to users and an input device 630 to provide a user or another device with means for entering data and/or otherwise interact with the computer system 600. Each of these output devices 625 and input devices 630 could be joined by one or more additional peripherals to further expand the capabilities of the computer system 600. A network communicator 635 may be provided to connect the computer system 600 to a network 650 and in turn to other devices connected to the network 650 including other clients, servers, data stores, and interfaces, for instance. The modules of the computer system 600 are interconnected via a bus 645. Computer system 600 includes a data source interface 620 to access data source 660. The data source 660 can be accessed via one or more abstraction layers implemented in hardware or software. For example, the data source 660 may be accessed by network 650. In some embodiments the data source 660 may be accessed via an abstraction layer, such as, a semantic layer.

A data source is an information resource. Data sources include sources of data that enable data storage and retrieval. Data sources may include databases, such as, relational, transactional, hierarchical, multi-dimensional (e.g., OLAP), object oriented databases, and the like. Further data sources include tabular data (e.g., spreadsheets, delimited text files), data tagged with a markup language (e.g., XML data), transactional data, unstructured data (e.g., text files, screen scrapings), hierarchical data (e.g., data in a file system, XML data), files, a plurality of reports, and any other data source accessible through an established protocol, such as, Open Data Base Connectivity (ODBC), produced by an underlying software system (e.g., ERP system), and the like. Data sources may also include a data source where the data is not tangibly stored or otherwise ephemeral such as data streams, broadcast data, and the like. These data sources can include associated data foundations, semantic layers, management systems, security systems and so on.

In the above description, numerous specific details are set forth to provide a thorough understanding of embodiments. One skilled in the relevant art will recognize, however that the embodiments can be practiced without one or more of the specific details or with other methods, components, techniques, etc. In other instances, well-known operations or structures are not shown or described in details.

Although the processes illustrated and described herein include series of steps, it will be appreciated that the different embodiments are not limited by the illustrated ordering of steps, as some steps may occur in different orders, some concurrently with other steps apart from that shown and described herein. In addition, not all illustrated steps may be required to implement a methodology in accordance with the one or more embodiments. Moreover, it will be appreciated that the processes may be implemented in association with the apparatus and systems illustrated and described herein as well as in association with other systems not illustrated.

The above descriptions and illustrations of embodiments, including what is described in the Abstract, is not intended to be exhaustive or to limit the one or more embodiments to the precise forms disclosed. While specific embodiments and examples are described herein for illustrative purposes, various equivalent modifications are possible, as those skilled in the relevant art will recognize. These modifications can be made in light of the above detailed description. Rather, the scope is to be determined by the following claims, which are to be interpreted in accordance with established doctrines of claim construction.

## Claims

1. A computer implemented method to consume a cloud resource of a cloud platform (110), the method comprising:
implementing an extension (130) of an on-premise platform (120) to provide a cloud application runtime (132, 136) at the on-premise platform (120), wherein the cloud application runtime (132, 136) is a local version of an application runtime (150) installed on the cloud platform (110);
deploying an application (A, Z) to the cloud application runtime (132, 136);
at a connectivity agent (155) running in the cloud platform (110), receiving a request from the application (A, Z) deployed to the local version of the application runtime (150) to consume the cloud resource, wherein the request is forwarded from the on-premise platform (120) to the connectivity agent (155) via a secure tunnel, and
forwarding a response from the cloud resource to the requesting application (A, Z), the response forwarded by the connectivity agent (155) via the secure tunnel.

2. The method of claim 1 further comprising:
forwarding the request to the cloud resource by the connectivity agent (155), and
at the connectivity agent (155), receiving the response from the requested cloud resource.

3. The method of claim 1 or 2 further comprising:
receiving the request at a cloud connector (145) installed on the on-premise platform (120), and
forwarding the request to the connectivity agent (155) by the cloud connector (145) via the secure tunnel.

4. The method of any one of claims 1 to 3 further comprising:
establishing the secure tunnel between a cloud connector (145), which optionally is installed on the on-premise platform (120), and an instance of the connectivity agent (155) to permit communication between the application (A, Z) deployed to the on-premise platform (120) and the cloud platform (110).

5. The method of any one of claims 1 to 4 further comprising:
initiating a first connection from the local version of the cloud application runtime (132, 136) to a first instance of the connectivity agent (155) via a proxy, and
consuming the cloud resource by the application (A, Z) deployed to the on-premise platform (120) via the first connection.

6. The method of claim 5 further comprising:
initiating a second connection from the cloud connector (145) to a second instance of the connectivity agent (155) running in the cloud application runtime (150), and
providing an on-premise resource to a cloud application (X) deployed to the cloud platform (110) via the second connection.

7. The method of any one of claims 1 to 6 further comprising:
associating the connectivity agent (155) with a predefined cloud account (115) for the application (A, Z) deployed to the on-premise platform (120).

8. The method of claim 7 further comprising:
upon receiving the request at the connectivity agent (155), verifying credentials of the predefined cloud account (115).

9. A computer system to consume a cloud resource by an application (A, Z) deployed to an on-premise platform (120), the system comprising:
a memory to store computer executable instructions;
at least one computer processor coupled to the memory to execute the instructions, to perform operations according to the method of any one of claims 1 to 8.

## Patentansprüche

1. Ein computerimplementiertes Verfahren, um eine Cloud-Ressource einer Cloud-Plattform (110) zu verbrauchen, wobei das Verfahren Folgendes umfasst:
Implementieren einer Erweiterung (130) einer Vor-Ort-Plattform (*on-premise platform*) (120), um eine Cloud-Anwendungslaufzeit (132, 136) auf der Vor-Ort-Plattform (120) bereitzustellen, wobei die Cloud-Anwendungslaufzeit (132, 136) eine lokale Version einer auf der Cloud-Plattform (110) installierten Anwendungslaufzeit (150) ist;
Bereitstellen einer Anwendung (A, Z) in der Cloud-Anwendungslaufzeit (*cloud application runtime*) (132, 136);
bei einem Konnektivitätsagenten (155), der in der Cloud-Plattform (110) läuft, Empfangen einer Anforderung von der Anwendung (A, Z), die in der lokale Version der Anwendungslaufzeit (150) bereitgestellt wird, um die Cloud-Ressource zu verbrauchen, wobei die Anforderung weitergeleitet wird von der Vor-Ort-Plattform (120) an den Konnektivitätsagenten (155) über einen sicheren Tunnel, und
Weiterleiten einer Antwort von der Cloud-Ressource an die anfragende Anwendung (A, Z), wobei die Antwort vom Konnektivitätsagenten (155) über den sicheren Tunnel weitergeleitet wird.

2. Das Verfahren nach Anspruch 1, das ferner Folgendes umfasst:
Weiterleiten der Anfrage an die Cloud-Ressource durch den Konnektivitätsagenten (155), und,
beim Konnektivitätsagenten (155), Empfangen der Antwort von der angeforderten Cloud-Ressource.

3. Das Verfahren nach Anspruch 1 oder 2, das ferner Folgendes umfasst:
Empfangen der Anfrage an einem *Cloud-Connector* (145), der auf der Vor-Ort-Plattform (120) installiert ist und
Weiterleiten der Anfrage an den Konnektivitätsagenten (155) durch den *Cloud-Connector* (145) über den sicheren Tunnel.

4. Das Verfahren nach irgendeinem der Ansprüche von 1 bis 3, das ferner Folgendes umfasst:
Herstellen des sicheren Tunnels zwischen einem *Cloud-Connektor* (145), der optional auf der Vor-Ort-Plattform (120) installiert ist, und einer Instanz des Konnektivitätsagenten (155), um eine Kommunikation zwischen der Anwendung (A, Z), die auf der Vor-Ort-Plattform (120) bereitgestellt wird, und der Cloud-Plattform (110) zu ermöglichen.

5. Das Verfahren nach irgendeinem der Ansprüche von 1 bis 4, das ferner Folgendes umfasst:
Initiieren einer ersten Verbindung von der lokalen Version der Cloud-Anwendungslaufzeit (132, 136) zu einer ersten Instanz des Konnektivitätsagenten (155) über einen Proxy und
Verbrauchen der Cloud-Ressource durch die Anwendung (A, Z), die über die erste Verbindung auf der Vor-Ort-Plattform (120) bereitgestellt wird.

6. Das Verfahren nach Anspruch 5, das ferner Folgendes umfasst:
Initiieren einer zweiten Verbindung vom *Cloud Connector* (145) zu einer zweiten Instanz des Konnektivitätsagenten (155), der in der Cloud-Anwendungslaufzeit (150) läuft, und
Liefern einer Vor-Ort-Ressource an eine Cloud-Anwendung (X), die über die zweite Verbindung auf der Cloud-Plattform (110) bereitgestellt wird.

7. Das Verfahren nach irgendeinem der Ansprüche von 1 bis 6, das ferner Folgendes umfasst:
Zuordnen des Konnektivitätsagenten (155) zu einem vordefinierten Cloud-Konto (115) für die Anwendung (A, Z), die auf der Vor-Ort-Plattform (120) bereitgestellt wird.

8. Das Verfahren nach Anspruch 7, das ferner Folgendes umfasst:
nach Erhalt der Anfrage beim Konnektivitätsagenten (155), Überprüfen der Anmeldeinformationen des vordefinierten Cloud-Kontos (115).

9. Ein Computersystem zum Verbrauch einer Cloud-Ressource durch eine Anwendung (A, Z), die auf einer Vor-Ort-Plattform (120) bereitgestellt wird, wobei das System Folgendes umfasst:
einen Speicher zum Speichern von ausführbaren Computerbefehlen;
mindestens einen Computerprozessor, der mit dem Speicher gekoppelt ist, um die Anweisungen auszuführen, um Operationen nach dem Verfahren nach irgendeinem der Ansprüche 1 bis 8 durchzuführen.

## Revendications

1. Un procédé mis en oeuvre par ordinateur pour consommer une ressource en nuage d'une plate-forme en nuage (110), le procédé comprenant le fait de :
mettre en oeuvre une extension (130) d'une plate-forme sur site (120) pour fournir un *runtime* d'application en nuage (132, 136) au niveau de la plate-forme sur site (120), sachant que le *runtime* d'application en nuage (132, 136) est une version locale d'un *runtime* d'application (150) installé sur la plate-forme en nuage (110) ;
déployer une application (A, Z) vers le *runtime* d'application en nuage (132, 136) ;
au niveau d'un agent de connectivité (155) s'exécutant dans la plate-forme en nuage (110), recevoir une demande de la part de l'application (A, Z) déployée vers la version locale du *runtime* de l'application (150) pour consommer la ressource en nuage, sachant que la demande est transmise de la plate-forme sur site (120) à l'agent de connectivité (155) via un tunnel sécurisé, et de
transmettre une réponse de la ressource en nuage à l'application requérante (A, Z), la réponse étant transmise par l'agent de connectivité (155) via le tunnel sécurisé.

2. Le procédé d'après la revendication 1 comprenant en outre le fait de :
transmettre la demande à la ressource en nuage par l'agent de connectivité (155), et
au niveau de l'agent de connectivité (155), recevoir la réponse de la ressource en nuage demandée.

3. Le procédé d'après la revendication 1 ou 2, comprenant en outre le fait de :
recevoir la demande au niveau d'un *cloud connector* (145) installé sur la plate-forme sur site (120), et de
transmettre la demande à l'agent de connectivité (155) par le *cloud connector* (145) via le tunnel sécurisé.

4. Procédé d'après une quelconque des revendications de 1 à 3, comprenant en outre le fait de :
établir le tunnel sécurisé entre un *cloud connector* (145), qui est installé en option sur la plate-forme sur site (120), et une instance de l'agent de connectivité (155) pour permettre la communication entre l'application (A, Z) déployée sur la plate-forme sur site (120) et la plate-forme en nuage (110).

5. Procédé d'après une quelconque des revendications de 1 à 4, comprenant en outre le fait de :
initier une première connexion à partir de la version locale du *runtime* d'application en nuage (132, 136) vers une première instance de l'agent de connectivité (155) par l'intermédiaire d'un proxy, et de
consommer la ressource en nuage par l'application (A, Z) déployée sur la plate-forme sur site (120) via la première connexion.

6. Le procédé d'après la revendication 5, comprenant en outre le fait de :
initier une seconde connexion à partir du *cloud connector* (145) vers une seconde instance de l'agent de connectivité (155) s'exécutant dans le *runtime* d'application en nuage (150), et de
fournir une ressource sur site à une application en nuage (X) déployée sur la plate-forme en nuage (110) via la seconde connexion.

7. Procédé d'après une quelconque des revendications de 1 à 6, comprenant en outre le fait de :
associer l'agent de connectivité (155) à un compte en nuage prédéfini (115) pour l'application (A, Z) déployée sur la plate-forme sur site (120).

8. Le procédé d'après la revendication 7, comprenant en outre le fait de :
lors de la réception de la demande auprès de l'agent de connectivité (155), vérifier les informations d'identification du compte en nuage prédéfini (115).

9. Un système informatique pour consommer une ressource en nuage par une application (A, Z) déployée sur une plate-forme sur site (120), le système comprenant :
une mémoire pour stocker des instructions exécutables par ordinateur ;
au moins un processeur informatique couplé à la mémoire pour exécuter les instructions, afin d'effectuer des opérations conformément au procédé d'après une quelconque des revendications de 1 à 8.
